# EUROPÄISCHE PATENTSCHRIFT

(11) **EP 4 227 365 B1**
(45) Veröffentlichungstag und Bekanntmachung des Hinweises auf die Patenterteilung: **28.02.2024**
(21) Anmeldenummer: 23155710.9
(22) Anmeldetag: 09.02.2023
(51) Int. Cl.: C08L 77/02, C08L 77/06, C08J 5/04, C08J 5/10

(54) **FASERVERSTÄRKTE POLYAMID-FORMMASSE**
FIBRE-REINFORCED POLYAMIDE MOULDING COMPOSITION
MASSE À MOULER EN POLYAMIDE RENFORCÉE PAR DES FIBRES

(30) Priorität: 11.02.2022 CH 1272022
(43) Veröffentlichungstag der Anmeldung: 16.08.2023
(73) Patentinhaber: EMS-CHEMIE AG, 7013 Domat/Ems (CH)
(72) Erfinder: Harder, Philipp, 7000 Chur (CH); Aepli, Etienne, 7013 Domat/Ems (CH); Hoffmann, Botho, 7013 Domat/Ems (CH)

(56) Entgegenhaltungen:
- EP-A1- 1 205 439
- WO-A1-2022/068138
- WO-A2-2009/062692
- US-A1- 2014 288 220

## Beschreibung

Die Erfindung betrifft faserverstärkte Polyamid-Formmassen, die neben einer ausgewählten Polymermischung aus zwei verschiedenen Polyamiden Verstärkungsfasern und Metallborate enthalten. Die vorliegende Erfindung betrifft weiterhin die Verwendung derartiger Formmassen zur Herstellung von Formkörpern und die Formkörperselbst.

Polyamide sind heutzutage weit verbreitet als Strukturelemente für den Innen- und Aussenbereich, was im Wesentlichen auf die hervorragenden mechanischen Eigenschaften zurückzuführen ist. Eine Verbesserung der mechanischen Eigenschaften, wie Festigkeit und Steifheit, lässt sich insbesondere durch den Zusatz von faserförmigen Verstärkungsstoffen, z.B. Kohlenstofffasern oder Glasfasern, erreichen.

EP 2 060 607 A1 betrifft Polyamid-Formmassen verstärkt mit einer flachen Langglasfaser, die hinsichtlich der Reissfestigkeit quer zur Verarbeitungsrichtung, der Kerbschlagzähigkeit und der Fliesslänge Vorteile gegenüber den Formmassen, hergestellt mit runden Glasfasern, aufweisen.

WO 2014 160 564 A1 beschreibt Polyamidzusammensetzungen, die durch Kombination von Kupfer- und Zinkverbindungen ein verbessertes Wärmealterungsverhalten zeigen. In den erfindungsgemässen Beispielen werden in Kombination mit dem Hitzestabilisator Kupferiodid die Zinkverbindungen Zinkoxid oder Zinkborat verwendet.

Zinkverbindungen werden häufig auch als Synergist für Flammschutzmittel eingesetzt, wie z.B. in US 2010 113 655 A1 beschrieben. Hier werden flammgeschützte, faserverstärkte Polyamidzusammensetzungen auf Basis von partiell aromatischen Polyamiden und Metallphosphinaten als Flammschutzmittel, die das Mineral Böhmit und/oder Zinkborat als Flammschutzsynergist enthalten, offenbart.

Es hat sich allerdings gezeigt, dass die bisher im Stand der Technik bekannten faserverstärkten Kunststoffe, auch Polyamid-Formmassen die Langfasern enthalten, noch nicht in allen Punkten befriedigende Ergebnisse liefern. So ist es wünschenswert, mit Fasern verstärkte Polyamid-Formmassen und hieraus herstellbare Formteile zur Verfügung zu stellen, die einen geringen Verzug, hohe Steifigkeit und Festigkeit sowie eine ausgezeichnete Oberflächenqualität bei gleichzeitig hohem Füllgrad an Verstärkungsfasern aufweisen. Insbesondere besteht ein grosses Bedürfnis nach Formkörpern aus faserverstärkten Polyamid-Formmassen, die in Bezug auf die Kerbschlagzähigkeit, die Wärmeformbeständigkeit (HDT) und die Widerstandsfähigkeit gegenüber Schimmelpilzen oder Bakterien überlegene Eigenschaften zum Stand der Technik aufweisen. Darüber hinaus sollten sich die Eigenschaften in trockenem und konditioniertem Zustand nur wenig voneinander unterscheiden.

Aufgabe der vorliegenden Erfindung ist es deshalb, Polyamid-Formmassen anzugeben, die zu Formkörpern verarbeitet werden können, wobei die Formkörper möglichst gleichzeitig ausgezeichnete Eigenschaften betreffend den Verzug, die Schlag- und Kerbschlagzähigkeit, die Bruchspannung und Bruchdehnung sowie die Oberflächenqualität, die Wärmeformbeständigkeit und die Beständigkeit gegenüber Schimmelpilzen und/oder Bakterien aufweisen sollen. Insbesondere sollen die Polyamid-Formmassen eine Klassifikation gemäss ISO 846:2020 (Bestimmung der Einwirkung von Mikroorganismen auf Kunststoffe) für die Widerstandsfähigkeit gegenüber Schimmelpilzen von "Null" (0), "EINS A" (1a) oder "Eins" (1) und für die Widerstandsfähigkeit gegenüber Bakterien von "Null" (0) oder "Eins" (1) aufweisen.

Diese Aufgabe wird in Bezug auf die Formmasse durch die Merkmale des Patentanspruches 1, betreffend den Formkörper durch die Merkmale des Patentanspruches 12 und betreffend die Verwendung durch die Merkmale des Patentanspruches 14 gelöst. Die Unteransprüche zeigen vorteilhafte Weiterbildungen auf.

Diese Aufgabe wird erfindungsgemäss zum einen gelöst durch eine faserverstärkte Polyamid-Formmasse gemäss Anspruch 1, wobei die Polyamid-Formmasse aus folgenden Komponenten besteht:
A 33 - 79.4 Gew.-% einer Polymermischung bestehend aus
A1 55 bis 85 Gew.-% mindestens eines teilkristallinen, aliphatischen Polyamids ausgewählt aus der Gruppe PA 6, PA 46, PA 56, PA 66, PA 66/6, PA 610, PA 612, PA 6/12, PA 1010, PA 11, PA 12, PA 1012, PA 1212 und Mischungen hiervon;
A2 15 bis 45 Gew.-% mindestens eines teilaromatischen Polyamids ausgewählt aus der Gruppe PA 6I, PA 5I/5T, PA 6I/6T, PA 6T/6I, PA 10I/10T, PA 10T/6T, PA 6T/BACT/66/BAC6, PA MXD6, PA MXD6/MXDI und Mischungen hiervon; wobei die Summe aus A1 und A2 100 Gew.-% A ergibt;
B 20 bis 60 Gew.-% Verstärkungsfasern;
C 0.6 bis 2.0 Gew.-% Metallborat, wobei das molare Verhältnis von Metall zu Bor im Bereich von 0.5 bis 4 liegt;
D 0 bis 5.0 Gew.-% Additive, verschieden von A, B, C;
wobei die Summe der Komponenten A bis D 100 Gew.-% ergibt und wobei die Formmasse weder Kupferhalogenide noch Metallphosphinate umfasst.

Im Sinne der vorliegenden Erfindung wird unter dem Begriff "Polyamid" (Abkürzung PA) ein Oberbegriff verstanden, welcher Homopolyamide und Copolyamide unabhängig von ihrer Molmasse bzw. ihrer Viskosität umfasst. Somit umfasst der Oberbegriff Polyamid sowohl die weniger hochmolekularen Polyamid-Vorkondensate als auch die nachkondensierten, hochmolekularen Homo- und Copolyamide. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: T oder TPS für Terephthalsäure, I oder IPS für Isophthalsäure, BAC für 1,3-Bis(aminomethyl)cyclohexan (CAS-Nr. 2579-20-6), MXDA für m-Xylylendiamin (CAS-Nr. 1477-55-0), Für 1,6-Hexandiamin, auch als Hexamethylendiamin bezeichnet, wird im Folgenden die Abkürzung HMDA verwendet.

Amorphe Polyamide weisen verglichen mit den teilkristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von weniger als 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Teilkristalline Polyamide besitzen neben einer Glasübergangstemperatur einen ausgeprägten Schmelzpunkt und zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mindestens 15 J/g, besonders bevorzugt von mindestens 20 J/g, ganz besonders bevorzugt im Bereich von 25 bis 80 J/g.

Im Hinblick auf die erfindungsgemäss verwendeten Polyamide bilden die Monomere der Dicarbonsäure- und der Diaminkomponente sowie der gegebenenfalls eingesetzten Aminocarbonsäuren oder monofunktionellen Reglern durch die Kondensation Wiederholungseinheiten bzw. Endgruppen in Form von Amiden aus, die von den jeweiligen Monomeren abgeleitet sind. Diese machen in der Regel mindestens 95 Mol-%, insbesondere mindestens 99 Mol-% aller im Polyamid vorliegenden Wiederholungseinheiten und Endgruppen aus. Daneben kann das Polyamid auch geringe Mengen anderer Wiederholungseinheiten aufweisen, die aus Abbau- oder Nebenreaktionen der Monomere, beispielsweise der Diamine, resultieren können.

Die erfindungsgemäss vorgeschlagene faserverstärkte Polyamid-Formmasse zeichnet sich nach dem unabhängigen Patentanspruch 1 dadurch aus, dass sie frei ist an Kupferhalogeniden und Metallphosphinaten, also weder Kupferhalogenide noch Metallphosphinate umfasst und dass sie eine Polyamidmatrix bildende Polymermischung A aufweist, die aus spezifischen Edukten A1 und A2 gebildet worden ist.

Bevorzugt enthält die erfindungsgemässe Polyamid-Formmasse die Komponente A im Bereich von 40.4 bis 74.4 Gew.-% und besonders bevorzugt im Bereich von 46.6 bis 69.25 Gew.-%, jeweils bezogen auf die Summe der Komponenten A bis D.

Die Polymermischung A umfasst 55 bis 85 Gew.-% mindestens eines aliphatischen, teilkristallinen Polyamides A1, das ausgewählt ist aus der Gruppe PA 6, PA 46, PA 56, PA 66, PA 66/6, PA 610, PA 612, PA 6/12, PA 1010, PA 11, PA 12, PA 1012, PA 1212 und/oder Mischungen hiervon. Bevorzugt wird das Polyamid A1 ausgewählt aus der Gruppe PA 6, PA 56, PA 66, PA 66/6, PA 610 sowie Mischungen davon. Eine bevorzugte Mischung besteht beispielweise aus PA 66 und PA 6 oder aus PA 610 und PA 6. Weiterhin enthält die Polymermischung als zweiten Bestandteil 15 bis 45 Gew.-% mindestens eines teilaromatischen, amorphen oder teilkristallinen Polyamides A2, das ausgewählt ist aus der Gruppe PA 6I, PA 5I/5T, PA 6I/6T, PA 6T/6I, PA 10I/10T, PA 10T/6T, PA 6T/BACT/66/BAC6, PA MXD6, PA MXD6/MXDI sowie Mischungen hiervon. Bevorzugte Polyamide A2 sind PA 6I/6T und PA 6T/BACT/66/BAC6.

Bevorzugt liegt der Anteil der Komponente A1 im Bereich von 60 bis 85 Gew.-%, vorzugsweise im Bereich von 65 bis 80 Gew.-% und der Anteil der Komponente A2 liegt bevorzugt im Bereich von 15 bis 40 Gew.-%, vorzugsweise im Bereich von 20 bis 35 Gew.-%, jeweils bezogen auf die Summe der Komponenten A1 und A2.

Wesentlich bei der vorgeschlagenen faserverstärkten Polyamid-Formmasse ist nun, dass in der Polyamidmatrix, die aus 33 bis 79.4 Gew.-% der vorstehend beschriebenen Polymermischung A besteht, 20 bis 60 Gew.-% einer Verstärkungsfaser B enthalten ist, bei der es sich um eine Schnittfaser (Kurzfaser) oder eine Endlosfaser (Langfaser, Roving), vorzugsweise um eine Endlosfaser (Langfaser oder Roving) handelt.

Bevorzugt ist die Verstärkungsfaser B eine Glasfaser, eine Basaltfaser oder eine Kohlenstofffaser oder eine Mischung dieser Fasern, besonders bevorzugt eine Glasfaser.

Insbesondere bevorzugt handelt es sich bei der Verstärkungsfaser B um eine Endlosglasfaser (Langglasfaser, Roving).

Geeignete Endlosglasfasern weisen einen Durchmesser von 10 bis 20 µm, bevorzugt von 11 bis 18 µm, besonders bevorzugt von 12 bis 17 µm, ganz besonders bevorzugt von 11 bis 13 µm auf. Die Endlosglasfasern können aus allen Glassorten, wie z.B. D-, E-, ECR-, L-, S-, R-Glas, oder beliebigen Mischungen davon bestehen. Bevorzugt sind Glasfasern aus E-Glas, ECR-Glas oder S-Glas oder aus Mischungen dieser Fasern.

Geeignete Glasfasern besitzen eine Querschnittsfläche, die entweder kreisförmig (oder synonym rund) oder nicht-kreisförmig (oder synonym flach) sein kann, wobei im letzteren Fall das Abmessungsverhältnis von der Haupt-Querschnittsachse zur Neben-Querschnittsachse mindestens 2 ist, bevorzugt im Bereich von 2 bis 6 liegt.

Gemäss einer bevorzugten Ausführungsform der vorliegenden Erfindung ist Komponente B mit 25 bis 55 Gew.-% und besonders bevorzugt mit 30 bis 50 Gew.-% in der Polyamid-Formmasse enthalten, wobei sich diese Mengenangaben auf die Summe der Komponenten A bis D beziehen.

Insbesondere bevorzugt werden erfindungsgemäss E-, ECR- und/oder S-Glasfasern verwendet. Es können aber auch alle anderen Glasfasersorten, wie z. B. D-, L-, R-Glasfasern oder beliebige Mischungen davon oder Mischungen mit E-, ECR- und/oder S-Glasfasern eingesetzt werden. Die Verstärkungsfasern, insbesondere die Glasfasern können mit einer für Thermoplaste, insbesondere für Polyamid geeigneten Schlichte, enthaltend einen Haftvermittler auf Basis einer Amino- oder Epoxysilanverbindung, versehen sein.

Bei Komponente B handelt es sich gemäss einer bevorzugten Ausführungsform um eine hochfeste Glasfaser oder sogenannte S-Glasfaser. Diese beruht vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid, wobei eine Zusammensetzung von 58 bis 70 Gew.-% Siliciumdioxid (SiO₂), 15 bis 30 Gew.-% Aluminiumoxid (Al₂O₃), 5 bis 15 Gew.-% Magnesiumoxid (MgO), 0 bis 10 Gew.-% Calciumoxid (CaO) und 0 bis 2 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid oder Lithiumoxid (Li₂O) bevorzugt wird. Insbesondere bevorzugt ist es, wenn die hochfeste Glasfaser die nachfolgende Zusammensetzung aufweist: 62 bis 66 Gew.-% Siliciumdioxid (SiO₂), 22 bis 27 Gew.-% Aluminiumoxid (Al₂O₃), 8 bis 12 Gew.-% Magnesiumoxid (MgO), 0 bis 5 Gew.-% Calciumoxid (CaO), 0 bis 1 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid und Lithiumoxid (Li₂O).

Die erfindungsgemässen Polyamid-Formmassen umfassend Schnittfasern (Kurzfasern) können durch die bekannten Verfahren der Compoundierung hergestellt werden, wobei die Polyamide und die Zusatzstoffe in einem Extruder aufgeschmolzen werden und die Schnittfasern vorzugsweise in die Polyamidschmelze eingetragen und mit der Polymerschmelze vermischt werden, bevor die faserverstärkte Polymer-Formmasse aus dem Extruder ausgetragen und granuliert wird. Dabei wird vorzugsweise ein zylinderförmiges Granulat mit einer Länge von 2 bis 5 mm und einem Durchmesser von 2 bis 4 mm erzeugt.

Die erfindungsgemässen Polyamid-Formmassen umfassend Endlosfasern (Langfasern) können durch die bekannten Verfahren zur Herstellung von langfaserverstärktem Stäbchengranulat hergestellt werden, insbesondere durch Pultrusionsverfahren, bei denen der endlose Faserstrang (Langglasfaserstrang, Roving) mit der Polymerschmelze vollständig durchtränkt und anschliessend abgekühlt und geschnitten wird. In der Regel werden die Polymerkomponenten und die Additive in einem Extruder aufgeschmolzen und als Schmelze direkt in die Imprägniereinheit gefördert.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden, wobei besonders gute Eigenschaften des Formteils bei Anwendung von schonenden Verarbeitungsverfahren erreicht werden. In diesem Zusammenhang bedeutet schonend vor allem, dass ein übermässiger Faserbruch und die damit einhergehende starke Reduktion der Faserlänge weitgehend vermieden werden. Beim Spritzguss bedeutet dies, dass vorzugsweise Schnecken mit grossem Durchmesser verwendet werden sollten.

Die beim Pultrusionsverfahren als Endlosfasern (Langglasfasern, Roving) eingesetzten Glasfasern können mit einem geeigneten Schlichtesystem aus Haftvermittlern und Filmbildnern ausgerüstet sein. Als Haftvermittler können zum Beispiel organisch funktionalisierte Silane wie Aminosilane, Epoxysilane, Vinylsilane, Methacrylsilane oder Methacryloxysilane verwendet werden. Als Filmbildner können zum Beispiel Systeme auf Basis von Polyurethanen, Polyesterurethanen, Polyetherurethanen, Polyhydroxyethern, Epoxidharzen, Polyamiden, Acrylpolymeren oder Mischungen davon verwendet werden.

Aus stofflicher Sicht betreffend die Zusammensetzung der die Polyamidmatrix bildenden Polymermischung A umfasst die Erfindung grundsätzlich alle Kombinationen der unter den Merkmalen A1 genannten aliphatischen Polyamide mit der unter den Merkmalen A2 genannten teilaromatischen Polyamiden. Die aliphatischen, teilkristallinen Polyamide A1 sind dabei bevorzugt ausgewählt aus der Gruppe PA 6, PA 56, PA 66, PA 66/6, PA 610 und Mischungen davon. Die Polyamide A1 besitzen bevorzugt eine Lösungsviskosität ηᵣₑₗ, gemessen nach ISO 307:2007 in m-Kresol (0.5 g Polymergranulat gelöst in 100 ml m-Kresol, 20 °C) im Bereich von 1.3 bis 2.7, bevorzugt im Bereich von 1.4 bis 2.3, insbesondere im Bereich von 1.50 bis 2.00.

Die Herstellung dieser aliphatischen Polyamide erfolgt, wie aus dem Stand der Technik bekannt, durch Polymerisation bzw. Polykondensation der entsprechenden Lactame und/oder Aminocarbonsäuren und/oder Diamine und Dicarbonsäuren, gegebenenfalls unter Einsatz von Kettenreglern, bevorzugt Monocarbonsäuren oder Monoamine.

Bei den teilaromatischen Polyamiden A2 sind die Copolyamide PA 6I/6T und PA 6T/BACT/66/BAC6 besonders bevorzugt. Hinsichtlich der Copolyamide PA 6I/6T sind die Zusammensetzungsbereiche besonders bevorzugt, deren Anteil an 6T-Einheiten weniger als 50 mol-% ausmacht, wobei ein Zusammensetzungsbereich 6T:6I von 15:85 bis 45:55 besonders bevorzugt wird. Bevorzugt ist also ein amorphes, teilaromatisches Polyamid 6I/6T (A2) mit 55 bis 85 Mol-% Hexamethylenisophthalamid-Einheiten und 15 bis 45 Mol-% Hexamethylenterephthalamid-Einheiten.

Hinsichtlich der Copolyamide PA 6T/BACT/66/BAC6 sind die Zusammensetzungsbereiche bevorzugt, deren Anteil an 6T- und BACT-Einheiten zusammen mehr als 60 Mol-%, besonders bevorzugt wenigstens 70 Mol-% ausmachen, wobei ein Zusammensetzungsbereich 6T:BACT:66:BAC6 von 54-72:16-36:6-16:2-4 Mol-% ganz besonders bevorzugt wird. Bevorzugt ist insbesondere ein teilaromatisches, teilkristalliines Polyamid 6T/BACT/66/BAC6 (A2) mit 55 bis 70 Mol-% Hexamethylenterephthalamid-Einheiten, 20 bis 25 Mol-% 1,3-Bis(aminomethyl)cyclohexanterephthalamid-Einheiten, 6 bis 16 Mol-% Hexamethylenadipamid-Einheiten und 2 bis 4 Mol-% 1,3-Bis(aminomethyl)cyclohexanadipamid-Einheiten.

Bezüglich der Polymermischung (A) werden folgende Zusammensetzungen besonders bevorzugt:
(A1): PA 66 oder PA 610 oder Mischung aus PA 66 und PA 6 oder Mischung aus PA 610 und PA 6
(A2): PA 6I/6T, wobei das Mol-Verhältnis im Bereich von 65:35 bis 75:25 liegt oder insbesondere 67:33 beträgt, sowie:
   (A1): PA 66 oder Mischung aus PA 66 und PA 6 oder Mischung aus PA 610 und PA 6
   (A2): PA 6T/BACT/66/BAC6, wobei das Mol-Verhältnis der 6T- und BACT-Einheiten mehr als 60, bevorzugt wenigstens 70 Mol-% beträgt.

In einer weiteren bevorzugten Ausführungsform weist die Komponente A2 eine Glasübergangstemperatur von grösser als 90 °C, bevorzugt grösser als 110 °C und besonders bevorzugt grösser als 120 °C auf.

Die Polyamide A2 besitzen dabei bevorzugt eine Lösungsviskosität ηᵣₑₗ, gemessen nach ISO 307:2007 in m-Kresol (0.5 g Polymergranulat gelöst in 100 ml m-Kresol, 20 °C) im Bereich von 1.3 bis 2.0, bevorzugt im Bereich von 1.35 bis 1.9, insbesondere im Bereich von 1.40 bis 1.8.

Die Herstellung der Polyamide A2 erfolgt, wie ebenfalls aus dem Stand der Technik bekannt, durch Umsetzung von im Wesentlichen molaren Mengen der entsprechenden Diamine und Dicarbonsäuren, gegebenenfalls unter Einsatz von Kettenreglern, bevorzugt Monocarbonsäuren oder Monoamine.

Die erfindungsgemässen Polyamid-Formmassen enthalten weiterhin noch wenigstens eine Metallborat-Verbindung im Bereich von 0.6 bis 2.0 Gew.-%, bevorzugt 0.6 bis 1.6 Gew.-% und besonders bevorzugt von 0.7 bis 1.4 Gew.-%, jeweils bezogen auf die Summe der Komponenten A bis D.

Dabei liegt das molare Verhältnis von Bor zu Metall (B:M-Verhältnis) in der Metallborat-Verbindung im Bereich von 0.5 bis 4 und besonders bevorzugt im Bereich von 1 bis 3. Vorzugsweise handelt es sich beim Metall, das neben Bor in den Metallboraten vorkommt, um Alkali-, Erdalkali- und Übergangsmetalle, die einzeln oder in Kombination in den Metallboraten vorhanden sein können. Insbesondere bevorzugt als Metalle sind Natrium, Kalium, Magnesium, Calcium, Barium und Zink. Daneben können auch noch Aluminium und Silicium enthalten sein. Geeignete Metallborat-Verbindungen sind beispielsweise Natriumborate, insbesondere Boraxpentahydrat (Na₂O·2B₂O₃·5H₂O), Boraxdecahydrat (Na₂O·2B₂O₃.10H₂O), wasserfreies Borax (Na₂O·2B₂O₃) und Dinatriumoctaborattetrahydrat (Na₂O·4B₂O₃·4H₂O), Magnesiumborat (2MgO·B₂O₃), Calciumborat (2CaO3B₂O₃·5H₂O), Calciummetaborat (CaO·B₂O₃·4H₂O), Magnesium-Calciumborat, z.B. Hydroboracite (CaMg[B₃O₄(OH)₃]₂·3H₂O), Bariummetaborat (BaO·B₂O₃·H₂O), Zinkborat (xZnO·*y*B₂O₃·*z*H₂O), wie z.B. 2ZnO·3B₂O₃·7H₂O, 2ZnO·3B₂O₃·3.5H₂O, 2ZnO·2B₂O₃·3H₂O, 4ZnO·B₂O₃·H₂O, 2ZnO·3B₂O₃, Calciumsilikatborat, Natriumsilikatborat, Aluminiumsilikatborat, Aluminiumborat, Kupferborat, Eisenborat.

Im Sinne der Erfindung besonders bevorzugte Metallborat-Verbindungen sind Zinkborate mit der Formel (ZnO)_{X}(B₂O₃)_{Y}(H2O)_{Z}. Dabei ist weiterhin bevorzugt, wenn in der angegebenen Formel X Werte im Bereich von 2 bis 4, Y Werte im Bereich von 1 bis 3, und Z Werte im Bereich von 0 bis 5 annimmt.

Verschiedene Zinkborat-Verbindungen werden beispielsweise vertrieben von der Firma US Borax und zwar unter dem Markennamen Firebrake^{®}. Besonders bevorzugte Formen von Zinkborat sind solche, in denen X=4, Y=1 und Z=1 (Firebrake 415), in denen X=2, Y=3 und Z=3.5 (Firebrake 290), in denen X=2, Y=2 und Z=3 (Firebrake ZB-223) oder in denen X=2, Y=3 und Z=0 (Firebrake 500) ist.

Insbesondere bevorzugt sind die Zinkborat-Verbindungen mit einem B:M-Verhältnis von 3 gemäss der Formel (ZnO)₂(B₂O₃)₃(H2O)_{3.3-3.7}, wobei die wasserfreie Variante (ZnO)₂(B₂O₃)₃ besonders bevorzugt ist.

Im Rahmen der vorliegenden Erfindung hat das Metallborat unter den Gesichtspunkten der mechanischen Festigkeit und des Aussehens des Formteils vorzugsweise eine gewichtsmittlere Teilchengröße von 30 µm oder weniger, besonders bevorzugt 20 µm oder weniger. Durch die Verwendung des Metallborat-Pulvers mit einer Teilchengröße von 1 bis 20 µm kann die mechanische Festigkeit vorzugsweise stabilisiert werden.

Die erfindungsgemässe Polymamid-Formmasse kann als weitere Komponente noch Additive D in einer Menge bis zu 5.0 Gew.-%, bevorzugt in einer Menge von 0 bis 3.0 Gew.-% und besonders bevorzugt in einer Menge von 0.05 bis 2.0 Gew.-% enthalten. Dabei sind die Additive D verschieden von den Komponenten A, B und C. Die Komponente D ist insbesondere auch verschieden von Kupferhalogeniden und Metallphosphinaten. Das bedeutet, dass die erfindungsgemässen Polyamid-Formmassen frei sind an Kupferhalogeniden, wie z.B. Kupfer(I)iodid. Weiterhin enthalten die erfindungsgemässen Formmassen keine Flammschutzmittel, insbesondere keine Metallphosphinate. Die Formmasse umfasst also weder Kupferhalogenide noch Metallphosphinate.

Geeignete Additive sind beispielsweise anorganische Stabilisatoren, organische Stabilisatoren, Gleitmittel, Farb- und Markierungsstoffe, anorganischen Pigmente, organischen Pigmente, IR-Absorber, Antistatika, Antiblockmittel, Kristallisationsverzögerer, Kondensationskatalysatoren, Kettenregler, Entschäumer, kettenverlängernde Additive, Graphit, Kohlenstoffnanoröhrchen, Entformungsmittel, Trennmittel, optische Aufheller, photochrome Additive, Weichmacher, metallische Pigmente, Metallflitter, metallbeschichtete Partikel. Als Stabilisatoren bzw. Alterungsschutzmittel können in den erfindungsgemässen Polyamid-Formmassen, z.B. Antioxidantien, Antiozonantien, Lichtschutzmittel, UV-Stabilisatoren, UV-Absorber oder UV-Blocker, Wärmeschutzmittel sowie Mischungen hiervon enthalten sein.

In einer bevorzugten Ausführungsform enthält Komponente D neben den oben genannten Stabilisatoren noch folgende Verbindungen ausgewählt aus der Gruppe Zinkoxid, Zinksulfid, Zinkstearat, Zinkmontanat, Calicummontanat, Calciumstearat, Aluminiumstearat und Mischungen hiervon. Weiterhin ist bevorzugt, wenn diese Verbindungen zu 0.05 bis 0.5 Gew.-%, bezogen auf die Komponenten A bis D, in der Formmasse enthalten sind.

Es hat sich in Versuchen gezeigt, dass insbesondere eine Polyamid-Formmasse, die aus den folgenden Komponenten besteht, überlegene Eigenschaften aufweist:
A: 46.6 - 69.25 Gew.-% einer Polymermischung, bestehend aus
A1 65 bis 80 Gew.-% Polyamid PA6, PA 66 oder PA 610 und Mischungen hiervon;
A2 20 bis 35 Gew.-% Polyamid PA 6I/6T, PA 6T/BACT/66/BAC6 und Mischungen hiervon; wobei die Summe aus A1 und A2 100 Gew.-% A ergibt;
B: 30 - 50 Gew.-% Langglasfasern (Endlosglasfasern, Rovings);
C: 0.7- 1.4 Gew.-% Zinkborat mit einem B:M-Verhältnis von 0.5 bis 4;
D: 0.05 - 2.0 Gew.-% Additiv, verschieden von A, B, C;
wobei die Summe A bis D 100 Gew.-% beträgt und wobei die Formmasse weder Kupferhalogenide noch Metallphosphinate umfasst.

Überraschenderweise wurde gefunden, dass, wenn die gefüllten Polyamid-Formmassen nach der Erfindung zu Formkörpern verarbeitet werden, Formkörper erhalten werden, die überdurchschnittliche Eigenschaften, insbesondere in Bezug auf die Kerbschlagzähigkeit, die Bruchspannung, die Bruchdehnung, die Wärmeformbeständigkeit und die Widerstandsfähigkeit gegenüber Schimmelpilzen und/oder Bakterien aufweisen.

Weiterhin wurde überraschend gefunden, dass der Zusatz von Metallboraten in Kombination mit den bevorzugt verwendeten Langglasfasern (Endlosglasfasern) praktisch keine negativen Auswirkungen auf die mechanischen Eigenschaften der Formmasse oder der Formkörper hat. Wohingegen bei Verwendung von sogenannten Schnitt- oder Kurzglasfasern, Nachteile hinsichtlich der mechanischen Eigenschaften, insbesondere der Kerbschlagzähigkeit der Bruchspannung und der Bruchdehnung hingenommen werden müssen.

Offensichtlich bilden die erfindungsgemäss bevorzugt eingesetzten Langglasfasern (Endlosfasern, Rovings) durch Verwollung der bei der Herstellung der Formkörper gebildeten Faserbruchstücke ein Gespinst bzw. Skelett (Faseragglomerat) im Formkörper aus, das die Rissfortpflanzung wirksam unterbindet und so zur Formhaltigkeit bei höheren Temperaturen als auch zur Kerbschlagzähigkeit beiträgt und so die ausgezeichneten Eigenschaften trotz der Gegenwart eines pigmentartigen Zusatzstoffes wie das Metallborat ermöglicht.

Die ausgeprägte Verwollung der Langglasfasern im Formkörper wird noch dadurch verstärkt, dass die Langglasfasern beim Spritzguss weniger stark geschädigt werden. Dazu trägt insbesondere die vorzugsweise tiefviskose Polyamid-Matrix bei. Somit wird auch unter ungünstigen Umständen, wie z.B. hohe Scherung beim Spritzgiessen in der Formteilherstellung, dafür gesorgt, dass die Faserbruchstücke im Formkörper eine ausreichende mittlere Länge und Längenverteilung aufweisen, die zu einer ausgeprägten dreidimensionalen Faseragglomeration und damit zu hervorragenden Eigenschaften führen.

Besonders hervorzuheben bei den Formmassen verstärkt mit Langglasfasern (Endlosfasern, Rovings) und den daraus hergestellten Formkörpern ist, dass die Kerbschlagzähigkeit bei 23 °C durch den Zusatz an Metallborat im Wesentlichen unverändert konstant bleibt, also praktisch identisch mit der Metallborat-freien Formmasse ist. Dagegen wird die Kerbschlagzähigkeit bei 23 °C bei Verwendung von Kurzglasfasern durch Zusatz von Metallborat um bis zu 40% gegenüber der Metallborat freien Formmasse reduziert. Ein ähnliches Verhalten kann bezüglich der Bruchdehnung beobachtet werden. Auch hier zeigen die bevorzugt verwendeten Langglasfasern deutliche Vorteile.

Unbeschichtete Füllstoffe wie zum Beispiel fein gemahlene Metallborate wirken als Nukleierungsmittel für teilkristalline Polyamide, d.h. sie erhöhen die Kristallisationstemperatur und beschleunigen die Kristallisation. Damit geht eine oft unerwünschte Versprödung von faserverstärkten Thermoplasten einher. Durch geeignete Wahl der Matrixkomponenten, wie beispielsweise die Kombination eines teilkristallinen, aliphatischen Polyamids A1 mit einem amorphen, teilaromatischen Polyamid A2 kann die nukleierende Wirkung des Metallborats kompensiert werden.

Die erfindungsgemässen Polyamid-Formmassen weisen eine Wärmeformbeständigkeit HDT-C gemäss ISO 75:2013 von mindestens 120 °C, vorzugsweise von mindestens 130 °C und besonders bevorzugt von mindestens 200 °C auf.

Die erfindungsgemässen Polyamid-Formmassen weisen eine Wärmeformbeständigkeit HDT-A gemäss ISO 75:2013 von mindestens 200 °C, vorzugsweise von mindestens 230 °C auf.

Weiterhin umfasst die Erfindung Formkörper aus der beschriebenen Polyamid-Formmasse oder Formkörper aufweisend wenigstens einen Bereich oder eine Beschichtung aus einer Polyamid-Formmasse, vorzugsweise hergestellt durch Spritzguss, Extrusion oder Blasformen, wobei es sich vorzugsweise um einen Formkörper in den folgenden Bereichen handelt: Gehäusen, Abdeckungen oder Rahmen, eines Gehäuses oder eines Gehäusebestandteils, vorzugsweise Gehäuse oder Gehäuseteile für tragbare elektronische Geräte, Verkleidungen oder Abdeckungen, Haushaltsgeräte, Haushaltsmaschinen, Brillengestelle, Brillenrahmen, Sonnenbrillen, Fotoapparate, Ferngläser, dekorative Gegenstände, Geräte und Apparate für die Telekommunikation und Unterhaltungselektronik, Innen- und Aussenteile im Automobilsektor und im Bereich von anderen Transportmitteln, Innen und Aussenteile, vorzugsweise mit tragender oder mechanischer Funktion im Bereich Elektro, Möbel, Sport, Maschinenbau, Sanitär und Hygiene, Ventilatoren, insbesondere ein Ventilatorrotor oder Ventilatorrad, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Sensorgehäuse, Messgeräte, Abspielgeräte für Musik und/oder Video, Navigationsgeräte, GPS Geräte, elektronische Bilderrahmen, externe Festplatten und andere elektronische Speichermedien.

Dabei erfüllen die Formkörper bevorzugt die Anforderungen für fungizide Oberflächen gemäss Methode A der DIN EN ISO 846:2020 und der Test nach der in Annex C beschriebenen Methode ergibt bevorzugt die Einstufung "NULL" (0) oder "EINS A" (1a). Zusätzlich oder alternativ erfüllen die Formkörper die Anforderungen für die Widerstandfähigkeit gegenüber Bakterien gemäss Methode C der DIN EN ISO 846: 2020 und der Test nach der im Annex C beschriebenen Methode ergibt bevorzugt die Einstufung "NULL" (0) ergibt.

Die Erfindung betrifft ebenso die Verwendung beschriebenen Polyamid-Formmasse zur Herstellung von schimmelpilz- und bakterienresistenten Formkörpern, insbesondere von Türgriffen, Handfrei-Türöffnern, Handläufen, Küchengeräten, medizintechnischen Apparaten, Automotive Innenraum-Funktionsteile, Lenkrädern mit Hebeln und Knöpfen, Schalthebeln, Bedieneinheiten von Klimaanlagen, Bedieneinheiten von Unterhaltungsgeräten, Türschliesssysteme, Scharniere, Handgriffe, Haltegriffen und -stangen in Öffentlichen Verkehrsmitteln, medizinischen Pflegebetten, Krankenhausmöbel, Knöpfe und Bedienelemente in Aufzügen, Küchenmöbel, Badmöbel und Accessoires, Gehäusen und Abdeckungen, Lüftungssystemen, Ventilatoren, Axialventilatoren, Radialventilatoren, Prozessventilatorenrotoren.

Die Erfindung wird nachfolgend anhand der folgenden Beispiele näher erläutert. In den Beispielen und Vergleichsbeispielen wurden nachfolgend genannte Materialien verwendet:
- PA-1:: Polyamid-66 mit ηᵣₑₗ = 1.82, Tm = 262 °C, RADICI, IT
- PA-2:: Polyamid-6 mit ηᵣₑₗ = 1.80, Tm = 222 °C, BASF, DE
- APA-1:: Polyamid 6I/6T (67:33) mit ηᵣₑₗ = 1.50, Tg = 125 °C, EMS-CHEMIE AG, CH
- APA-2:: Polyamid 6T/BACT/66/BAC6 (68.5/23.5/6/2) mit ηᵣₑₗ = 1.65, Tm = 325 °C, Tg = 150 °C, EMS-CHEMIE AG, CH
- LGF-1:: E-Glas Roving NEG TufRov 4510-17-2400, runde Querschnittsfläche mit Durchmesser von 17 µm, Schlichtesystem mit Aminosilan-basiertem Haftvermittler und Epoxidharz-basiertem Filmbildner (Endlosglasfaser, Langglasfaser).
- LGF-2:: E-Glas Roving NEG TufRov 4510-12-1200, runde Querschnittsfläche mit Durchmesser von 12 µm, Schlichtesystem mit Aminosilan-basiertem Haftvermittler und Epoxidharz-basiertem Filmbildner (Endlosglasfaser, Langglasfaser).
- GF:: ECR-Glas Kurzfaserbündel, Vetrotex 995 EC10-4.5, Länge: 4.5 mm, Filamentdurchmesser: 10 µm, Saint-Gobain Vetrotex, FR
- Metallborat:: Firebrake 500, (ZnO)₂(B₂O₃)₃, M:B = 3, U.S. Borax, USA
- Stabilisator:: Mischung aus Irganox 1098 (BASF, DE) und Brüggolen H10 (Brüggemann, DE) im Verhältnis 2:1
- Zinksulfid:: Sachtolith HD-S, ZnS, Huntsman, USA

Die Formmassen der Zusammensetzungen **B7 bis B10, B12 und B13** in Tabelle 2 wurden auf einen Zweiwellenextruder der Fa. Werner u. Pfleiderer Typ ZSK 30 hergestellt. Die Granulate der Komponenten A1 und A2 sowie die Zusatzstoffe C und D wurden in die Einzugszone dosiert. Die Glasfasern (GF, Kurzglasfasern) wurden über einen Sidefeeder 3 Gehäuseeinheiten vor der Düse in die Polymerschmelze dosiert. Die Gehäusetemperatur wurde als aufsteigendes Profil von 270 bis 300 °C eingestellt. Bei 150 bis 200 upm wurden 10 kg Durchsatz erreicht. Die Granulierung erfolgte mittels einer Unterwassergranulierung bzw. Heissabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 110 °C für 24h wurden die Granulateigenschaften gemessen und die Prüfkörper hergestellt.

Die kontinuierlich verstärkten Zusammensetzungen **B1 bis B6** (Tabelle 1) und **B11** (Tabelle 2) wurden durch ein Pultrusionsverfahren hergestellt, bei dem die mit C und/oder D additivierten Polyamidmischungen A in einem Doppelschneckenextruder gemischt und aufgeschmolzen wurden, bevor sie in eine Imprägniereinheit überführt und mit den vorgewärmten Endlosfilament-Glasfasern (LGF-1 und LGF-2, Endlos-Glasfasern) in Kontakt gebracht wurden. Im Einzelnen verlief der Pultrusionsprozess wie folgt: Die Komponenten A1, A2, C und D wurden in die Einzugszone eines Doppelschneckenextruders mit einem Schneckendurchmesser von 40 mm dosiert. Anschließend wurden die Komponenten mit einem ansteigenden Temperaturprofil von 270 bis 340 °C gemischt. Der mit der Imprägniereinheit fest verbundene Extruder förderte die Schmelze direkt in die Imprägniereinheit, so dass die auf 180 bis 220 °C vorgeheizten Glasfasern infiltriert wurden. Die endlosen Glasfasern, 1200 tex Rovings im Falle von 12 µm Fasern und 2400 tex Rovings im Falle von 17 µm Fasern, wurden mit einer Geschwindigkeit von 8 bis 15 Metern pro Minute durch die Imprägnierzone, mit Heizzonen im Bereich von 340 bis 400 °C, gezogen. Die so imprägnierten Stränge wurden nach dem Abkühlen in Wasser auf eine Länge von 10 mm geschnitten. Nach der Pelletierung und Trocknung für 24 h bei 110 °C wurden die Eigenschaften der Pellets gemessen und die Prüfkörper hergestellt.

Die Prüfkörper wurden auf einer Arburg Spritzgiessanlage hergestellt, wobei die Zylindertemperaturen von 260 °C bis 300 °C und eine Scheckenumfangsgeschwindigkeit von 15 m/min eingestellt wurden. Die Formtemperatur wurde mit 100 - 140 °C gewählt.

Die Messungen wurden nach folgenden Normen und an folgenden Prüfkörpern durchgeführt.

### Zug-E-Modul

Die Bestimmung des Zug-E-Moduls wurde gemäß ISO 527 (2012) bei 23 °C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Bruchspannung und Bruchdehnung

Die Bestimmung von Bruchspannung und Bruchdehnung wurden gemäß ISO 527 (2012) bei 23 °C mit einer Zuggeschwindigkeit von 5 mm/min an einem ISO-Zugstab, Typ A1 (Masse 170 x 20/10 x 4 mm), hergestellt gemäß der Norm ISO/CD 3167 (2003), durchgeführt.

### Schlagzähigkeit nach Charpy

Die Bestimmung der Schlagzähigkeit nach Charpy wurde gemäß ISO 179/2*eU (1997, * 2 = instrumentiert) bei 23 °C an einem ISO-Prüfstab, Typ B1 (Masse 80 x 10 x 4 mm), hergestellt gemäß der Norm ISO/CD 3167 (2003), durchgeführt.

### Kerbschlagzähigkeit nach Charpy

Die Bestimmung der Kerbschlagzähigkeit nach Charpy wurde gemäß ISO 179/2*eA (1997, * 2 = instrumentiert) bei 23 °C an einem ISO-Prüfstab, Typ B1 (Masse 80 x 10 x 4 mm), hergestellt gemäß der Norm ISO/CD 3167 (2003), durchgeführt.

### Schmelzpunkt (Tₘ) und Schmelzenthalpie (ΔHₘ)

Der Schmelzpunkt und Schmelzenthalpie wurden nach DIN EN ISO 11357-3:2018 am Granulat bestimmt. Die DSC (Differential Scanning Calorimetry) Messungen wurden mit einer Aufheizrate von 20 K/min durchgeführt.

### Glasübergangstemperatur, T_{g}

Die Bestimmung der Glasübergangstemperatur T_{g} erfolgte nach DIN EN ISO 11357-2:2020 an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (T_{g}) wurde bei der zweiten Aufheizung bestimmt. Der Mittelpunkt des Glasübergangbereichs, welcher als Glasübergangstemperatur angegeben wurde, wurde nach der Methode "Half Height" ermittelt.

### Relative Viskosität, ηᵣₑₗ

Die relative Viskosität wurde gemäß ISO 307 (2007) bei 20 °C bestimmt. Dazu wurden 0.5 g Polymergranulat in 100 ml m-Kresol eingewogen, die Berechnung der relativen Viskosität (ηᵣₑₗ) nach ηᵣₑₗ = t/t₀ erfolgte in Anlehnung an Abschnitt 11 der Norm.

### Wärmeformbeständigkeitstemperatur (HDT)

Die Wärmeformbeständigkeitstemperatur oder auch Verformungstemperatur unter Belastung genannt (HDT, nach englischem "heat deflection temperature") wird als HDT/A und/oder HDT/C berichtet. HDT/A entspricht dem Verfahren A mit einer Biegespannung von 1,80 MPa und HDT/C entspricht dem Verfahren C mit einer Biegespannung von 8,00 MPa. Die HDT-Werte wurden gemäss ISO 75 (2013) an ISO-Schlagstäben der Dimension 80 x 10 x 4 mm bestimmt.

### Bestimmung der Einwirkung von Mikroorganismen auf Kunststoffe

Die Widerstandsfähigkeit gegenüber Schimmelpilzen und Bakterien wurde gemäss der Methoden A und C der DIN EN ISO 846:2020 anhand von Platten der Dimension 50 x 50 x 2 mm durchgeführt. Die Auswertung erfolgte anhand der in Annex C beschriebenen Methode.

Wenn in den Tabellen nicht anderes vermerkt ist, wurden die Prüfkörper für die Bestimmung der mechanischen Eigenschaften im trockenen Zustand verwendet. Dazu wurden die Prüfkörper nach dem Spritzguss mindestens 48 h bei Raumtemperatur in trockener Umgebung gelagert.

**Tabelle 1: Zusammensetzung und Eigenschaften der Bespiele B1 bis B6**

| **Beispiel** | **Einheit** | **B1** | **B2** | **B3** | **B4** | **B5** | **B6** |
|---|---|---|---|---|---|---|---|
| Zusammensetzung | | | | | | | |
| PA-1 (Komponente A1) | Gew.-% | 44.1 | 43.8 | 36.75 | 36.75 | 44.1 | 36.75 |
| APA-1 (Komponente A2) | Gew.-% | 14.7 | 14.6 | 12.25 | 12.25 | | |
| APA-2 (Komponente A2) | Gew.-% | | | | | 14.7 | 12.25 |
| LGF-1 (Komponente B) | Gew.-% | 40.0 | 40.0 | 50.0 | | 40.0 | |
| LGF-2 (Komponente B) | Gew.-% | | | | 50.0 | | 50.0 |
| GF (Komponente B) | Gew.-% | | | | | | |
| Metallborat (Komponente C) | Gew.-% | 0.90 | 1.30 | 0.75 | 0.75 | 0.90 | 0.75 |
| Stabilisator (Komponente D) | Gew.-% | 0.30 | 0.30 | 0.25 | 0.25 | 0.30 | 0.25 |

| **Eigenschaften** | | | | | | | |
|---|---|---|---|---|---|---|---|
| HDTA | °C | 255 | 254 | 255 | 255 | 253 | 258 |
| HDT C | °C | 208 | 208 | 217 | 218 | 210 | 220 |
| Zug-E-Modul | MPa | 14100 | 14100 | 17400 | 17600 | 14500 | 17800 |
| Bruchspannung | MPa | 238 | 235 | 268 | 288 | 242 | 290 |
| Bruchdehnung | % | 2.5 | 2.4 | 2.5 | 2.6 | 2.5 | 2.4 |
| Schlagzähigkeit Charpy, 23 °C | kJ/m² | 84 | 82 | 100 | 110 | 105 | 110 |
| Kerbschlagzähigkeit Charpy, 23 °C | kJ/m² | 30 | 29 | 33 | 38 | 45 | 42 |
| Widerstandsfähigkeit gegen Schimmelpilze (ISO 846, Methode A) | | 1a | 0 | 1a | 1a | 1a | 1a |
| Widerstandsfähigkeit gegen Bakterien (ISO 846, Methode C) | | 0 | 0 | 0 | 0 | 0 | 0 |

Die erfindungsgemässen Formmassen der Beispielen B1 - B8 zeigen eine gute bis sehr gute Widerstandsfähigkeit gegenüber Schimmelpilzen und Bakterien und damit deutliche Vorteile gegenüber den Vergleichsbeispielen B9 bis B13 auf. Das Beispiel B11 zeigt auf, dass die gewählte Metallborat-Konzentration zu niedrig ist, um eine ausreichende Widerstandsfähigkeit gegenüber Schimmelpilzen zu erzielen. Ein Vergleich der Beispiele B9 und B10 mit den Beispielen B1 bis B4 zeigt, dass die vorzugsweise eingesetzten Endlosglasfasern Vorteile hinsichtlich der Wärmeformbeständigkeit HDT-C, der Bruchspannung, der Bruchdehnung und der Kerbschlagzähigkeit aufweisen. Dagegen ist die Widerstandsfähigkeit gegenüber Schimmelpilzen und Bakterien auf gleich hohem Niveau wie bei den Beispielen B1, B2 und B4.

**Tabelle 2: Zusammensetzung und Eigenschaften der Beispiele B7 und B8 sowie der Vergleichsbeispiele B9 bis B13**

| **Beispiel** | **Einheit** | **B7** | **B8** | **B9** | **B10** | **B11** | **B12** | **B13** |
|---|---|---|---|---|---|---|---|---|
| **Zusammensetzung** | | | | | | | | |
| PA-1 (Komponente A1) | Gew.-% | 44.1 | 36.75 | 44.8 | 37.3 | 44.4 | 44.8 | |
| PA-2 (Komponente A1) | Gew.-% | | | | | | | 68.5 |
| APA-1 (Komponente A2) | Gew.-% | 14.7 | 12.25 | 14.9 | 12.4 | 14.8 | 14.9 | |
| LGF-1 (Komponente B) | Gew.-% | | | | | 40.0 | | |
| LGF-2 (Komponente B) | Gew.-% | | | | | | | |
| GF (Komponente B) | Gew.-% | 40.0 | 50.0 | 40.0 | 50.0 | | 40.0 | 30.0 |
| Metallborat (Komponente C) | Gew.-% | 0.90 | 0.75 | | | 0.50 | | 1.00 |
| Stabilisator (Komponente D) | Gew.-% | 0.30 | 0.25 | 0.30 | 0.25 | 0.30 | 0.25 | 0.50 |
| Zinksulfid (Komponente D) | Gew.-% | | | | | | 0.05 | |

| **Eigenschaften** | | | | | | | | |
|---|---|---|---|---|---|---|---|---|
| HDT A | °C | 235 | 235 | 235 | 235 | 255 | 237 | 205 |
| HDT C | °C | 142 | 160 | 145 | 165 | 210 | 148 | 135 |
| Zug-E-Modul | MPa | 14000 | 18200 | 14000 | 18000 | 14000 | 14100 | 9500 |
| Bruchspannung | MPa | 205 | 211 | 230 | 250 | 240 | 232 | 185 |
| Bruchdehnung | % | 2.1 | 1.9 | 3.0 | 2.5 | 2.5 | 3.0 | 4.2 |
| Schlagzähigkeit Charpy, 23°C | kJ/m² | 70 | 74 | 90 | 90 | 85 | 88 | 85 |
| Kerbschlagzähigkeit Charpy, 23°C | kJ/m² | 8 | 10 | 14 | 17 | 30 | 13 | 12 |
| Widerstandsfähigkeit gegen Schimmelpilze (ISO 846, Methode A) | | 1a | 1a | 4 | 4 | 2 | 3 | 3 |
| Widerstandsfähigkeit gegen Bakterien (ISO 846, Methode C) | | 0 | 0 | 0 | 0 | 0 | 1 | 1 |

Zur Beurteilung des Schimmelpilzbewuchses wurde ein Gitter mit 100 gleich grossen Quadraten auf die inkubierten Probenplatten mit der Dimension 50 x 50 x 2 mm gelegt und die Quadrate ausgezählt welche Bewuchs aufwiesen, wobei die 36 am Rand befindlichen Quadrate nicht in die Auswertung einbezogen wurden. Anhand der mit dem Auge oder dem Mikroskop sichtbaren, mit Schimmelpilzen bewachsenen Anzahl an Quadraten, wird folgende Bewertung festgelegt:
- 0:: Keine der inneren Quadrate sind unter dem Mikroskop bei 50-facher Vergrösserung erkennbar mit Schimmelpilzen bewachsen
- 1a:: 1 bis 16 Quadrate zeigen unter dem Mikroskop bei 50-facher Vergrösserung Spuren von Schimmelpilzbewuchs auf
- 2:: 1 bis 16 Quadrate weisen bei Beobachtung mit dem Auge Schimmelpilzbewuchs auf
- 3:: 17 bis 32 Quadrate weisen bei Beobachtung mit dem Auge Schimmelpilzbewuchs auf
- 4:: 33 bis 64 Quadrate weisen bei Beobachtung mit dem Auge Schimmelpilzbewuchs auf

Die Beurteilung der inkubierten Probenplatten hinsichtlich der Widerstandsfähigkeit gegen Bakterien erfolgte analog dem Schimmelpilztest, wobei die mit dem nackten Auge sichtbaren Quadrate mit Bakterienbewuchs ausgezählt wurden:
- 0:: Die inneren Quadrate sind frei von Bakterienbewuchs
- 1:: 1 bis 16 Quadrate zeigen Spuren von Bakterienbewuchs auf

## Patentansprüche

1. Polyamid-Formmasse bestehend aus
A 33 - 79.4 Gew.-% einer Polymermischung bestehend aus
A1 55 bis 85 Gew.-% mindestens eines teilkristallinen, aliphatischen Polyamids ausgewählt aus der Gruppe PA 6, PA 46, PA 56, PA 66, PA 66/6, PA 610, PA 612, PA 6/12, PA 1010, PA 11, PA 12, PA 1012, PA 1212 und Mischungen hiervon;
A2 15 bis 45 Gew.-% mindestens eines teilaromatischen Polyamids ausgewählt aus der Gruppe PA 6I, PA 5I/5T, PA 6I/6T, PA 10I/10T, PA 10T/6T, PA 6T/BACT/66/BAC6, PA MXD6, PA MXD6/MXDI und Mischungen hiervon;
wobei die Summe aus A1 und A2 100 Gew.-% A ergibt;
B 20 bis 60 Gew.-% einer Verstärkungsfaser;
C 0.6 bis 2.0 Gew.-% Metallborat, wobei das molare Verhältnis von Metall zu Bor im Bereich von 0.5 bis 4 liegt;
D 0 bis 5.0 Gew.-% Additive, verschieden von A, B, C;
wobei die Summe der Komponenten A bis D 100 Gew.-% ergibt und wobei die Formmasse weder Kupferhalogenide noch Metallphosphinate umfasst.

2. Polyamid-Formmasse nach Anspruch 1, **dadurch gekennzeichnet, dass**
der Anteil der Komponente A im Bereich von 40.4 bis 74.4 Gew.-% liegt, vorzugsweise im Bereich von 46.6 bis 69.25 Gew.-%, jeweils bezogen auf die Summe der Komponenten A bis D;
und/oder
der Anteil der Komponente A1 im Bereich von 60 bis 85 Gew.-% liegt, vorzugsweise im Bereich von 65 bis 80 Gew.-%, und der Anteil der Komponente A2 im Bereich von 15 bis 40 Gew.-% liegt, vorzugsweise im Bereich von 20 bis 35 Gew.-%, jeweils bezogen auf die Summe der Komponenten A1 und A2;
und/oder
der Anteil der Komponente B im Bereich von 25 bis 55 Gew.-% liegt, vorzugsweise im Bereich von 30 bis 50 Gew.-%, jeweils bezogen auf die Summe der Komponenten A bis D;
und/oder
der Anteil der Komponente C im Bereich von 0.6 bis 1.6 Gew.-% liegt, vorzugsweise im Bereich von 0.7 bis 1.4 Gew.-%, jeweils bezogen auf die Summe der Komponenten A bis D;
und/oder
der Anteil der Komponente D im Bereich von 0 bis 3.0 Gew.-% liegt, vorzugsweise im Bereich von 0.05 bis 2.0 Gew.-%.

3. Polyamid-Formmasse nach einem der vorhergehenden Ansprüche, **dadurch gekennzeichnet, dass**
das Polyamid A1 ausgewählt ist als PA6, PA 56, PA 66, PA 66/6, PA 610 und Mischungen hiervon;
und/oder
das Polyamid A2 ausgewählt ist als PA 6I/6T, PA 6T/BACT/66/BAC6 und einer Mischung hiervon.

4. Polyamid-Formmasse nach einem der vorhergehenden Ansprüche, **dadurch gekennzeichnet, dass** die Komponente A2 ausgewählt ist als
ein amorphes, teilaromatisches Polyamid PA 6I/6T mit 55 bis 85 Mol-% Hexamethylenisophthalamid-Einheiten und 15 bis 45 Mol-% Hexamethylenterephthalamid-Einheiten
und/oder
ein teilkristallines, teilaromatisches Polyamid PA 6T/BACT/66/BAC6 mit 55 bis 70 Mol-% Hexamethylenterephthalamid-Einheiten, 20 bis 25 Mol-% 1,3-Bis(aminomethyl)-cyclohexanterephthalamid-Einheiten, 6 bis 16 Mol-% Hexamethylenadipamid-Einheiten und 2 bis 4 Mol-% 1,3-Bis(aminomethyl)cyclohexanadipamid-Einheiten.

5. Polyamid-Formmasse nach einem der vorhergehenden Ansprüche, **dadurch gekennzeichnet, dass** die Verstärkungsfaser B eine Glasfaser, eine Basaltfaser oder eine Kohlenstofffaser, bevorzugt eine Glasfaser ist.

6. Polyamid-Formmasse nach einem der Ansprüche 1 bis 4, **dadurch gekennzeichnet, dass** die Verstärkungsfaser B eine Endlosglasfaser ist, die bevorzugt einen Durchmesser im Bereich von 10 bis 20 µm aufweist und/oder bevorzugt ausgewählt ist aus der Gruppe aus E-Glasfasern, ECR-Glasfasern, D-Glasfasern, L-Glasfasern, S-Glasfasern und/oder R-Glasfasern.

7. Polyamid-Formmasse nach einem der vorhergehenden Ansprüche, **dadurch gekennzeichnet, dass**
die Wärmeformbeständigkeit HDT-C gemäss ISO 75:2013 mindestens 120 °C, vorzugsweise mindestens 130 °C, insbesondere bevorzugt mindestens 200 °C beträgt;
und/oder
die Wärmeformbeständigkeit HDT-A gemäss ISO 75:2013 mindestens 200 °C, vorzugsweise mindestens 230 °C beträgt.

8. Polyamid-Formmasse nach einem der vorhergehenden Ansprüche, **dadurch gekennzeichnet, dass** das Metallborat C ausgewählt ist aus der Gruppe bestehend aus: Natriumborate, insbesondere Boraxpentahydrat Na₂O·2B₂O₃·5H₂O, Boraxdecahydrat Na₂O·2B₂O₃·10H₂O, wasserfreies Borax Na₂O·2B₂O₃ und Dinatriumoctaborattetrahydrat Na₂O·4B₂O₃·4H₂O, Magnesiumborat 2MgO·B₂O₃, Calciumborat 2CaO·3B₂O₃.5H₂O, Calciummetaborat CaO·B₂O₃·4H₂O, Magnesium-Calciumborat, z.B. Hydroboracite CaMg[B₃O₄(OH)₃]₂·3H₂O, Bariummetaborat (BaO·B₂O₃·H₂O), Zinkborat *x*ZnO·*y*B₂O₃*z*H₂O, wie z.B. 2ZnO·3B₂O₃·7H₂O, 2ZnO·3B₂O₃·3.5H₂O, 2ZnO·2B₂O₃·3H₂O, 4ZnO·B₂O₃·H₂O, 2ZnO·3B₂O₃, Calciumsilikatborat, Natriumsilikatborat, Aluminiumsilikatborat, Aluminiumborat, Kupferborat, Eisenborat.

9. Polyamid-Formmasse nach einem der vorhergehenden Ansprüche, **dadurch gekennzeichnet, dass** das Metallborat C ausgewählt ist als Zinkborat-Verbindung mit einem Bor:Metall-Verhältnis von 1 bis 3, bevorzugt von 3.

10. Polyamid-Formmasse nach einem der vorhergehenden Ansprüche, **dadurch gekennzeichnet, dass** die Komponente D ausgewählt ist aus der folgenden Gruppe: UV-Stabilisatoren, Hitzestabilisatoren, welche frei an Kupferhalogeniden sind, Radikalfängern, Verarbeitungshilfsstoffen, Einschlussverhinderern, Gleitmittel, Entformungshilfsstoffe, Kristallisations-Beschleuniger oder -Verzögerer, Fliesshilfsmittel, Gleitmittel, Entformungsmittel, Pigmente, Farbstoff- und Markierungsstoffe, optische Aufheller Verarbeitungshilfsmittel, Antistatika, Russ, Graphit, Kohlenstoffnanoröhrchen.

11. Polyamid-Formmasse nach einem der vorhergehenden Ansprüche, **dadurch gekennzeichnet, dass** Komponente D ausgewählt ist als UV-Stabilisatoren, Hitzestabilisatoren, Zinkoxid, Zinksulfid, Zinkstearat, Zinkmontanat, Calciummontanat, Calciumstearat, Aluminiumstearat und Mischungen hiervon.

12. Polyamid-Formmasse nach einem der Ansprüche 1 bis 11, **dadurch gekennzeichnet, dass** die Formmasse aus folgenden Komponenten besteht:
A: 46.6 - 69.25 Gew.-% einer Polymermischung, bestehend aus
A1 65 bis 80 Gew.-% Polyamid PA6, PA 66, PA 610 und Mischungen hiervon;
A2 20 bis 35 Gew.-% Polyamid PA 6I/6T, PA 6T/BACT/66/BAC6 und Mischungen hiervon;
wobei die Summe aus A1 und A2 100 Gew.-% A ergibt;
B: 30 - 50 Gew.-% Langglasfasern (Endlosglasfasern, Rovings);
C: 0.7- 1.4 Gew.-% Zinkborat mit einem Bor:Metall-Verhältnis von 0.5 bis 4;
D: 0.05 - 2.0 Gew.-% Additiv, verschieden von A, B, C;
wobei die Summe A bis D 100 Gew.-% beträgt und wobei die Formmasse weder Kupferhalogenide noch Metallphosphinate umfasst.

13. Formkörper aus einer Polyamid-Formmasse nach einem der vorhergehenden Ansprüche oder aufweisend wenigstens einen Bereich oder eine Beschichtung aus einer Polyamid-Formmasse nach einem der vorhergehenden Ansprüche, vorzugsweise hergestellt durch Spritzguss, Extrusion oder Blasformen, wobei es sich vorzugsweise um einen Formkörper im Bereich von Gehäusen, Abdeckungen oder Rahmen, eines Gehäuses oder eines Gehäusebestandteils handelt, vorzugsweise Gehäuse oder Gehäuseteile für tragbare elektronische Geräte, Verkleidungen oder Abdeckungen, Haushaltsgeräte, Haushaltsmaschinen, Brillengestelle, Brillenrahmen, Sonnenbrillen, Fotoapparate, Ferngläser, dekorative Gegenstände, Geräte und Apparate für die Telekommunikation und Unterhaltungselektronik, Innen- und Aussenteile im Automobilsektor und im Bereich von anderen Transportmitteln, Innen und Aussenteile, vorzugsweise mit tragender oder mechanischer Funktion im Bereich Elektro, Möbel, Sport, Maschinenbau, Sanitär und Hygiene, Ventilatoren, insbesondere ein Ventilatorrotor oder Ventilatorrad, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Sensorgehäuse, Messgeräte, Abspielgeräte für Musik und/oder Video, Navigationsgeräte, GPS Geräte, elektronische Bilderrahmen, externe Festplatten und andere elektronische Speichermedien.

14. Formkörper nach Anspruch 13, **dadurch gekennzeichnet, dass** die Anforderungen für fungizide Oberflächen gemäss Methode A der DIN EN ISO 846:2020 erfüllt werden und der Test nach der in Annex C beschriebenen Methode die Einstufung " NULL" oder "EINS A" oder "EINS" ergibt;
und/oder
die Widerstandfähigkeit gegenüber Bakterien gemäss Methode C der DIN EN ISO 846: 2020 erfüllt werden und der Test nach der im Annex C beschriebenen Methode die Einstufung "NULL" oder "EINS" ergibt.

15. Verwendung einer Polyamid-Formmasse nach einem der Ansprüche 1-12 zur Herstellung von schimmelpilz- und bakterienresistenten Formkörpern, insbesondere von Türgriffen, Handfrei-Türöffnern, Handläufen, Küchengeräten, medizintechnischen Apparaten, Automotive Innenraum-Funktionsteile, Lenkrädern mit Hebeln und Knöpfen, Schalthebeln, Bedieneinheiten von Klimaanlagen, Bedieneinheiten von Unterhaltungsgeräten, Türschliesssysteme, Scharniere, Handgriffe, Haltegriffen und - stangen in Öffentlichen Verkehrmitteln, medizinischen Pflegebetten, Krankenhausmöbel, Knöpfe und Bedienelemente in Aufzügen, Küchenmöbel, Badmöbel und Accessoires, Gehäusen und Abdeckungen, Lüftungssystemen, Ventilatoren, Axialventilatoren, Radialventilatoren, Prozessventilatorenrotoren.

## Claims

1. Polyamide moulding composition consisting of
A 33 - 79.4% by weight of a polymer mixture consisting of
A1 55 to 85% by weight of at least one semi-crystalline, aliphatic polyamide selected from the group consisting of PA 6, PA 46, PA 56, PA 66, PA 66/6, PA 610, PA 612, PA 6/12, PA 1010, PA 11, PA 12, PA 1012, PA 1212 and mixtures thereof;
A2 15 to 45% by weight of at least one partially aromatic polyamide selected from the group consisting of PA 6I, PA 5I/5T, PA 6I/6T, PA 10I/10T, PA 10T/6T, PA 6T/BACT/66/BAC6, PA MXD6, PA MXD6/MXDI and mixtures thereof;
wherein the sum of A1 and A2 is 100% by weight of A;
B 20 to 60% by weight of a reinforcing fiber;
C 0.6 to 2.0% by weight of metal borate, the molar ratio of metal to boron being in the range from 0.5 to 4;
D 0 to 5.0% by weight of additives, different from A, B, C;
wherein the sum of components A to D is 100% by weight and wherein the moulding composition comprises neither copper halides nor metal phosphinates.

2. Polyamide moulding composition according to claim 1, **characterized in that**
the proportion of component A is in the range from 40.4 to 74.4% by weight, preferably in the range from 46.6 to 69.25% by weight, in each case based on the sum of components A to D;
and/or
the proportion of component A1 is in the range from 60 to 85% by weight, preferably in the range from 65 to 80% by weight, and the proportion of component A2 is in the range from 15 to 40% by weight, preferably in the range from 20 to 35% by weight, in each case based on the sum of components A1 and A2;
and/or
the proportion of component B is in the range from 25 to 55% by weight, preferably in the range from 30 to 50% by weight, in each case based on the sum of components A to D;
and/or
the proportion of component C is in the range from 0.6 to 1.6% by weight, preferably in the range from 0.7 to 1.4% by weight, in each case based on the sum of components A to D;
and/or
the proportion of component D is in the range from 0 to 3.0% by weight, preferably in the range from 0.05 to 2.0% by weight.

3. Polyamide moulding composition according to any one of the preceding claims, **characterized in that**
the polyamide A1 is selected from PA6, PA 56, PA 66, PA 66/6, PA 610 and mixtures thereof;
and/or
the polyamide A2 is selected from PA 6I/6T, PA 6T/BACT/66/BAC6 and a mixture thereof.

4. Polyamide moulding composition according to one of the preceding claims, **characterized in that** component A2 is selected as
an amorphous, partially aromatic polyamide PA 6I/6T with 55 to 85 mol% hexamethylene isophthalamide units and 15 to 45 mol% hexamethylene terephthalamide units
and/or
a semi-crystalline, partially aromatic polyamide PA 6T/BACT/66/BAC6 with 55 to 70 mol% hexamethylene terephthalamide units, 20 to 25 mol% 1,3-bis(aminomethyl)-cyclohexane terephthalamide units, 6 to 16 mol% hexamethylene adipamide units and 2 to 4 mol% 1,3-bis(aminomethyl)cyclohexane adipamide units.

5. Polyamide moulding composition according to one of the preceding claims, **characterized in that** the reinforcing fibre B is a glass fibre, a basalt fibre or a carbon fibre, preferably a glass fibre.

6. Polyamide moulding composition according to one of claims 1 to 4, **characterized in that** the reinforcing fibre B is a continuous glass fibre which preferably has a diameter in the range from 10 to 20 µm and/or is preferably selected from the group consisting of E-glass fibres, ECR-glass fibres, D-glass fibres, L-glass fibres, S-glass fibres and/or R-glass fibres.

7. Polyamide moulding composition according to one of the preceding claims, **characterized in that**
the heat distortion temperature HDT-C according to ISO 75:2013 is at least 120 °C, preferably at least 130 °C, in particular preferably at least 200 °C;
and/or
the heat distortion temperature HDT-A according to ISO 75:2013 is at least 200 °C, preferably at least 230 °C.

8. Polyamide moulding composition according to one of the preceding claims, **characterized in that** the metal borate C is selected from the group consisting of: Sodium borates, in particular borax pentahydrate Na₂O·2B₂O₃·5H₂O, borax decahydrate Na₂O·2B₂O₃·10H₂O, anhydrous borax Na₂O·2B₂O₃ and disodium octaborate tetrahydrate Na₂O·4B₂O₃·4H₂O, magnesium borate 2MgO·B₂O₃, calcium borate 2CaO·3B₂O₃·5H₂O, calcium metaborate CaO·B₂O₃·4H₂O, magnesium calcium borate, e.g. hydroboracite CaMg[B₃O₄(OH)₃]₂·3H₂O, barium metaborate (BaO·B₂O₃·H₂O), zinc borate *x*ZnO·*y*B₂O₃·*z*H₂O, e.g. 2ZnO·3B₂O₃·7H₂O, 2ZnO-2ZnO·3B₂O₃·3.5H₂O, 2ZnO·2B₂O₃·3H₂O, 4ZnO·B₂O₃·H₂O, 2ZnO·3B₂O₃, calcium silicate borate, sodium silicate borate, aluminum silicate borate, aluminum borate, copper borate, iron borate.

9. Polyamide moulding composition according to one of the preceding claims, **characterized in that** the metal borate C is selected as a zinc borate compound with a boron:metal ratio of 1 to 3, preferably 3.

10. Polyamide moulding composition according to one of the preceding claims, **characterized in that** component D is selected from the following group: UV stabilizers, heat stabilizers which are free of copper halides, radical scavengers, processing aids, inclusion inhibitors, lubricants, demoulding aids, crystallization accelerators or retarders, flow aids, lubricants, demoulding agents, pigments, dyeing and marking agents, optical brighteners processing aids, antistatic agents, carbon black, graphite, carbon nanotubes.

11. Polyamide moulding composition according to one of the preceding claims, **characterized in that** component D is selected from UV stabilizers, heat stabilizers, zinc oxide, zinc sulphide, zinc stearate, zinc montanate, calcium montanate, calcium stearate, aluminium stearate and mixtures thereof.

12. Polyamide moulding composition according to any one of claims 1 to 11, **characterized in that** the molding composition consists of the following components:
A: 46.6 - 69.25 % by weight of a polymer mixture consisting of
A1 65 to 80% by weight of polyamide PA6, PA 66, PA 610 and mixtures thereof;
A2 20 to 35% by weight of polyamide PA 6I/6T, PA 6T/BACT/66/BAC6 and mixtures thereof;
where the sum of A1 and A2 is 100% by weight of A;
B: 30 - 50 % by weight long glass fibers (continuous glass fibers, rovings);
C: 0.7 - 1.4 % by weight zinc borate with a boron:metal ratio of 0.5 to 4;
D: 0.05 - 2.0% by weight of additive, different from A, B, C;
wherein the sum of A to D is 100% by weight and wherein the moulding composition comprises neither copper halides nor metal phosphinates.

13. A moulded article of a polyamide moulding composition according to any one of the preceding claims or comprising at least one region or coating of a polyamide moulding composition according to any one of the preceding claims, preferably produced by injection moulding, extrusion or blow moulding, preferably being a moulded article in the field of housings, covers or frames, a housing or a housing component, preferably housings or housing parts for portable electronic devices, claddings or covers, household appliances, household machines, spectacle frames, covers or frames, a housing or a housing component, preferably housings or housing components for portable electronic devices, claddings or covers, household appliances, household machines, spectacle frames, spectacle frames, sunglasses, cameras, binoculars, decorative objects, devices and appliances for telecommunications and consumer electronics, interior and exterior parts in the automotive sector and in the field of other means of transportation, interior and exterior parts, preferably with a load-bearing or mechanical function in the electrical, furniture, sports, mechanical engineering, sanitary and hygiene sectors, fans, in particular a fan rotor or fan wheel, medicine, energy and drive technology, in particular preferably cell phones, smartphones, organizers, laptop computers, notebook computers, tablet computers, radios, cameras, watches, calculators, sensor housings, measuring devices, music and/or video players, navigation devices, GPS devices, electronic picture frames, external hard drives and other electronic storage media.

14. Moulded article according to claim 13, **characterized in that** the requirements for
fungicidal surfaces according to method A of DIN EN ISO 846:2020 are met and the test according to the method described in Annex C results in the classification "ZERO" or "ONE A" or "ONE";
and/or
the resistance to bacteria according to method C of DIN EN ISO 846: 2020 is fulfilled and the test according to the method described in Annex C results in the classification "ZERO" or "ONE".

15. Use of a polyamide moulding compound according to any one of claims 1-12 for the manufacture of mold and bacteria resistant moulded articles, in particular door handles, hands-free door openers, handrails, kitchen appliances, medical devices, automotive interior functional parts, steering wheels with levers and knobs, control levers, control units of air conditioning systems, control units of entertainment devices, door locking systems, hinges, handles, grab handles and bars in public transportation, medical care beds, hospital furniture, buttons and controls in elevators, kitchen furniture, bathroom furniture and accessories, housings and covers, ventilation systems, fans, axial fans, centrifugal fans, process fan rotors.

## Revendications

1. Masse à mouler en polyamide constituée de
A 33 - 79,4 % en poids d'un mélange de polymères constitué de
A1 55 à 85 % en poids d'au moins un polyamide aliphatique partiellement cristallin choisi dans le groupe PA 6, PA 46, PA 56, PA 66, PA 66/6, PA 610, PA 612, PA 6/12, PA 1010, PA 11, PA 12, PA 1012, PA 1212 et des mélanges de ceux-ci ;
A2 15 à 45 % en poids d'au moins un polyamide partiellement aromatique choisi dans le groupe PA 6I, PA 5I/5T, PA 6I/6T, PA 10I/10T, PA 10T/6T, PA 6T/BACT/66/BAC6, PA MXD6, PA MXD6/MXDI et leurs mélanges ;
la somme de A1 et A2 donnant 100 % en poids de A ;
B 20 à 60 % en poids d'une fibre de renforcement ;
C 0,6 à 2,0 % en poids de borate de métal, le rapport molaire du métal au bore étant compris entre 0,5 et 4 ;
D 0 à 5,0 % en poids d'additifs autres que A, B, C ;
la somme des composants A à D étant égale à 100 % en poids et la masse à mouler ne comprenant ni halogénures de cuivre ni phosphinates métalliques.

2. Masse à mouler en polyamide selon la revendication 1, **caractérisée en ce que**
la proportion du composant A se situe dans la plage de 40,4 à 74,4 % en poids, de préférence dans la plage de 46,6 à 69,25 % en poids, dans chaque cas par rapport à la somme des composants A à D ;
et/ou
la proportion du composant A1 se situe dans la plage de 60 à 85 % en poids, de préférence dans la plage de 65 à 80 % en poids, et la proportion du composant A2 se situe dans la plage de 15 à 40 % en poids, de préférence dans la plage de 20 à 35 % en poids, respectivement par rapport à la somme des composants A1 et A2 ;
et/ou
la proportion du composant B se situe dans la plage de 25 à 55 % en poids, de préférence dans la plage de 30 à 50 % en poids, dans chaque cas par rapport à la somme des composants A à D ;
et/ou
la proportion du composant C se situe dans la plage de 0,6 à 1,6 % en poids, de préférence dans la plage de 0,7 à 1,4 % en poids, dans chaque cas par rapport à la somme des composants A à D ;
et/ou
la proportion du composant D se situe dans la plage de 0 à 3,0 % en poids, de préférence dans la plage de 0,05 à 2,0 % en poids.

3. Masse à mouler en polyamide selon l'une des revendications précédentes, **caractérisée en ce que**
le polyamide A1 est choisi parmi le PA6, le PA 56, le PA 66, le PA 66/6, le PA 610 et les mélanges de ceux-ci ;
et/ou
le polyamide A2 est choisi parmi le PA 6I/6T, le PA 6T/BACT/66/BAC6 et un mélange de ceux-ci.

4. Masse à mouler en polyamide selon l'une des revendications précédentes, **caractérisée en ce que** le composant A2 est choisi comme étant
un polyamide amorphe partiellement aromatique PA 6I/6T contenant 55 à 85 % en moles de motifs d'hexaméthylène-isophtalamide et 15 à 45 % en moles de motifs d'hexaméthylène-téréphtalamide
et/ou
un polyamide PA 6T/BACT/66/BAC6 partiellement cristallin, partiellement aromatique, comprenant 55 à 70 % en moles de motifs d'hexaméthylène téréphtalamide, 20 à 25 % en moles de motifs de 1,3-bis(aminométhyl)cyclohexanéphthalamide, 6 à 16 % en moles de motifs d'hexaméthylène adipamide et 2 à 4 % en moles de motifs de 1,3-bis(aminométhyl)cyclohexanadipamide.

5. Masse à mouler en polyamide selon l'une des revendications précédentes, **caractérisée en ce que** la fibre de renforcement B est une fibre de verre, une fibre de basalte ou une fibre de carbone, de préférence une fibre de verre.

6. Masse à mouler en polyamide selon l'une des revendications 1 à 4, **caractérisée en ce que** la fibre de renforcement B est une fibre de verre continue, qui présente de préférence un diamètre dans la plage de 10 à 20 µm et/ou est de préférence choisie dans le groupe des fibres de verre E, des fibres de verre ECR, des fibres de verre D, des fibres de verre L, des fibres de verre S et/ou des fibres de verre R.

7. Masse à mouler en polyamide selon l'une des revendications précédentes, **caractérisée en ce que**
la résistance à la déformation thermique HDT-C selon ISO 75:2013 est d'au moins 120 °C, de préférence d'au moins 130 °C, en particulier de préférence d'au moins 200 °C ;
et/ou
la résistance à la déformation thermique HDT-A selon ISO 75:2013 est d'au moins 200 °C, de préférence d'au moins 230 °C.

8. Masse à mouler en polyamide selon l'une des revendications précédentes, **caractérisée en ce que** le borate métallique C est choisi dans le groupe constitué par : Les borates de sodium, en particulier le pentahydrate de bore Na₂O2·B₂O₃·5H₂O, borax décahydraté Na₂O·2B₂O₃·10H₂O, borax anhydre Na₂O·2B₂O₃ et octaborate de disodium tétrahydraté Na₂O·4B₂O₃·4H₂O, borate de magnésium 2MgO·B₂O₃, borate de calcium 2CaO·3B₂O₃·5H₂O, métaborate de calcium CaO·B₂O₃·4H₂O, borate de magnésium et de calcium, par exemple hydroboracite CaMg[B₃O₄(OH)₃]₂·3H₂O, métaborate de baryum (BaO·B₂O₃·H₂O), Borate de zinc *x*ZnO·*y*B₂O₃·*z*H₂O, comme par exemple 2ZnO·3B₂O₃·7H₂O, 2ZnO·3B₂O₃·3.5H₂O, 2ZnO·2B₂O₃·3H₂O, 4ZnO·B₂O₃·H₂O, 2ZnO·3B₂O₃, borate de silicate de calcium, borate de silicate de sodium, borate de silicate d'aluminium, borate d'aluminium, borate de cuivre, borate de fer.

9. Masse à mouler en polyamide selon l'une quelconque des revendications précédentes, **caractérisée en ce que** le borate métallique C est choisi parmi les composés de borate de zinc ayant un rapport bore:métal de 1 à 3, de préférence de 3.

10. Masse à mouler en polyamide selon l'une des revendications précédentes, **caractérisée en ce que** le composant D est choisi dans le groupe suivant : Stabilisateurs UV, stabilisateurs thermiques exempts d'halogénures de cuivre, piégeurs de radicaux, auxiliaires de traitement, inhibiteurs d'inclusion, lubrifiants, auxiliaires de démoulage, accélérateurs ou retardateurs de cristallisation, auxiliaires d'écoulement, lubrifiants, agents de démoulage, pigments, colorants et marqueurs, azurants optiques, auxiliaires de traitement, antistatiques, noir de carbone, graphite, nanotubes de carbone.

11. Masse à mouler en polyamide selon l'une quelconque des revendications précédentes, **caractérisée en ce que** le composant D est choisi parmi les stabilisants aux UV, les stabilisants à la chaleur, l'oxyde de zinc, le sulfure de zinc, le stéarate de zinc, le montanate de zinc, le montanate de calcium, le stéarate de calcium, le stéarate d'aluminium et leurs mélanges.

12. Masse à mouler en polyamide selon l'une quelconque des revendications 1 à 11, **caractérisée en ce que** la masse à mouler est constituée des composants suivants :
A : 46,6 - 69,25 % en poids d'un mélange de polymères constitué de
A1 65 à 80 % en poids de polyamide PA6, PA 66, PA 610 et de leurs mélanges ;
A2 20 à 35 % en poids de polyamide PA 6I/6T, PA 6T/BACT/66/BAC6 et leurs mélanges ;
la somme de A1 et A2 donnant 100 % en poids de A ;
B : 30-50% en poids de fibres de verre longues (fibres de verre continues, rovings) ;
C : 0,7 - 1,4 % en poids de borate de zinc avec un rapport bore:métal de 0,5 à 4 ;
D : 0,05 - 2,0% en poids d'additif, différent de A, B, C ;
la somme de A à D étant de 100 % en poids et la masse à mouler ne comprenant ni halogénures de cuivre ni phosphinates métalliques.

13. Corps moulé à partir d'une masse à mouler en polyamide selon l'une des revendications précédentes ou présentant au moins une zone ou un revêtement à partir d'une masse à mouler en polyamide selon l'une des revendications précédentes, de préférence fabriqué par moulage par injection, extrusion ou moulage par soufflage, dans lequel il s'agit de préférence d'un corps moulé dans le domaine des boîtiers, des couvercles ou des cadres, d'un boîtier ou d'un élément de boîtier, de préférence des boîtiers ou des éléments de boîtier pour des appareils électroniques portables, des habillages ou des couvercles, des appareils ménagers, des machines domestiques, des montures de lunettes, des cadres de lunettes, des lunettes de soleil, des appareils photo, des jumelles, des objets décoratifs, appareils et dispositifs de télécommunication et d'électronique grand public, pièces intérieures et extérieures dans le secteur automobile et dans le domaine d'autres moyens de transport, pièces intérieures et extérieures, de préférence avec fonction portante ou mécanique dans le domaine de l'électricité, des meubles, du sport, de la construction mécanique, du sanitaire et de l'hygiène, ventilateurs, en particulier un rotor de ventilateur ou une roue de ventilateur, Médecine, technique énergétique et d'entraînement, en particulier de préférence les téléphones mobiles, les smartphones, les organiseurs, les ordinateurs portables, les ordinateurs bloc-notes, les ordinateurs tablettes, les radios, les appareils photo, les montres, les calculateurs, les boîtiers de capteurs, les appareils de mesure, les lecteurs de musique et/ou de vidéo, les appareils de navigation, les appareils GPS, les cadres photo électroniques, les disques durs externes et autres supports de stockage électroniques.

14. Corps moulés selon la revendication 13, **caractérisés en ce que** les exigences pour les surfaces fongicides selon la méthode A de la norme DIN EN ISO 846:2020 sont remplies et que le test selon la méthode décrite dans l'annexe C donne la classification "ZERO" ou "UN A" ou "UN" ;
et/ou
la résistance aux bactéries selon la méthode C de la norme DIN EN ISO 846 : 2020 est satisfaite et le test selon la méthode décrite dans l'annexe C donne la classification "ZERO" ou "UN".

15. Utilisation d'une masse à mouler en polyamide selon l'une des revendications 1 à 12 pour la fabrication de corps moulés résistants aux moisissures et aux bactéries, en particulier de poignées de porte, d'ouvre-portes mains libres, de mains courantes, d'ustensiles de cuisine, d'appareils médico-techniques, de pièces fonctionnelles d'habitacle automobile, de volants avec leviers et boutons, de leviers de commande, d'unités de commande d'installations de climatisation, unités de commande d'appareils de divertissement, systèmes de fermeture de portes, charnières, poignées, poignées et barres de maintien dans les transports publics, lits médicalisés, meubles d'hôpitaux, boutons et commandes d'ascenseurs, meubles de cuisine, meubles de salle de bains et accessoires, boîtiers et couvercles, systèmes de ventilation, ventilateurs, ventilateurs axiaux, ventilateurs centrifuges, rotors de ventilateurs de processus.
